# EUROPEAN PATENT APPLICATION

(11) **EP 4 725 715 A1**
(43) Date of publication of application: **15.04.2026**
(21) Application number: 24205867.5
(22) Date of filing: 10.10.2024
(51) Int. Cl.: B60B 27/00, B60B 27/02, B60B 27/04, F16C 35/073

(54) **BICYCLE REAR HUB STRUCTURE**

(71) Applicant: Glory Wheel Enterprise Co., Ltd., Taichung City 408019 (TW)
(72) Inventor: LEE, CHIEN HAO, 408019 Taichung City (TW)
(74) Representative: Cabinet Chaillot

(57) **Abstract**

A bicycle rear hub structure includes a hub which has multiple ratchet teeth therein. An axle passes through the hub and includes a first section, a second section, and a third section. A first bearing is placed between the space and the second section. A first positioning ring and a second positioning ring are fitted onto the second section, and abut each other. The first positioning ring abuts the first bearing. A third positioning ring is fitted onto the third section, and abuts the second positioning ring. A ratchet sleeve includes a pawl seat. The ratchet sleeve is inserted into the hub. The second positioning ring is located between the pawl seat and the second section, and abuts the third positioning ring. These components of the rear hub structure forms a loose radial fit to compensate concentricity differences between the components, making the hub rotation smoother.

## Description

### BACKGROUND OF THE INVENTION

### 1. Fields of the invention

The present invention relates to a bicycle rear hub structure, and more particularly, to a positioning ring structure that improves concentricity. The bicycle rear hub structure compensates for differences in concentricity between the hub, the axle, the ratchet sleeve, and the bearings, making the hub rotation smoother and achieving the effect of a simpler component structure.

### 2. Descriptions of Related Art

A hub structure is located between the bicycle rear wheel and the freewheel of a bicycle. The hub body has ratchet teeth, with an axle passing through the hub body. A ratchet sleeve is fitted on one end of the hub body. The ratchet sleeve has multiple pawls formed to the periphery of the ratchet sleeve so as to be engaged with the ratchet teeth of the hub body in a one-way locking mechanism. This drives the hub body to rotate synchronously, achieving the effect of driving the rear wheel rotation.

A known bicycle hub structure, as disclosed in Taiwan utility model patent No. 105214476 titled "Bicycle Hub Structure", includes a hollow hub with an opening on one end thereof that has an inner diameter larger than the middle inner diameter of the hub. Inside the opening and on the other end of the hub, there are separate recesses. At the bottom edge of the inside of this opening, several limiting slot holes are arranged radially, designed to accommodate several compression springs. At the junction of the inside of the opening and the recess, there is an internal threaded section. Near the outer edge of the opening, there is a positioning flange. A rod-shaped axle is inserted through the center of the hub. The axle has threaded sections at both ends, and has positioning flanges on one end and approximately in the middle.

When bearings are fitted from both ends of the axle, the positioning flanges respectively position the inner sides of the two bearings within the recesses located at the inner end of the opening and on the other end of the hub. A hollow internal gear ring has an external threaded section on its outer periphery. This allows it to lock and combine with the internal threaded section located at the junction of the hub opening and the recess. The hollow internal gear ring has multiple internal teeth formed to the inner periphery thereof. A hollow external gear ring, which is fitted inside the internal gear ring at the opening end of the hub on the axle. The outer periphery of the external gear ring has multiple external teeth, so as to mesh with the internal teeth on the inner periphery of the internal gear ring. The external gear ring has several ratchet teeth formed to the outer end face thereof. A positioning ring, which is fitted on the axle at the opening end of the hub, positioned on the outer side of the bearing that is fitted at the inner end of the opening of the hub.

A sleeve that is open at both ends, fitted at the opening end of the hub. The sleeve includes a sleeve body, two bearings, and a positioning sleeve. The inner end of the sleeve body has an extended tube, with a ratchet ring assembled on the outer periphery of the extended tube, and ratchet teeth are formed on the outer end face of the ratchet ring. The two bearings are positioned at both ends inside the sleeve body, with the bearing at the inner end of the sleeve body specifically fitted on the opening end of the extended tube. The positioning sleeve separates these two bearings and maintains an appropriate distance between them. When the sleeve is fitted onto the axle from the opening end of the hub, the ratchet ring assembled on the outer periphery of the extended tube of the sleeve body engages with the compression springs fitted in the limiting slot holes at the inner bottom of the opening of the hub by the ratchet teeth on the outer end face. The elastic compression allows the ratchet teeth on the outer end face of the external gear ring to mesh with the ratchet teeth on the outer end face of the ratchet ring, enabling one-way rotation of the external gear ring. An oil seal is fixed onto the positioning flange located near the outer edge of the opening of the hub. Two nuts are matched with the external threaded sections at both ends of the axle.

After inserting the axle from one side of the hub, the two bearings are fitted from both ends of the axle. They are positioned using the positioning flanges located on one end and approximately in the middle of the axle, so that these two bearings fit into the recesses on the inner end of the opening and on the other end of the hub respectively. Then, the external threaded section on the axle at the other end of the opening of the hub is locked with a nut to prevent the bearing on that side from slipping out.

Next, the external gear ring, the positioning ring, and the sleeve are fitted in sequence onto the axle from the opening end of the hub. Finally, another nut is locked onto the other external threaded section on that side of the axle to complete the assembly of the hub structure.

However, in the known hub structure, the two bearings are only separated by a positioning ring. Due to manufacturing tolerances between the axle, the hub, the ratchet sleeve, and the bearings, there can be differences in concentricity. This affects the smoothness of the rotation of the hub. Therefore, there is a need for improvement in the overall structure.

The present invention intends to provide a bicycle rear hub structure to eliminate the shortcomings mentioned above.

### SUMMARY OF THE INVENTION

The present invention relates to a bicycle rear hub structure and comprises a hub having a space defined in one end thereof, and multiple ratchet teeth are formed in an inner wall of the space. An axle passes through the hub. A first section, a second section, and a third section are sequentially formed to an outer periphery of the axle. Each of the first, second and third sections form a stepped structure. An end of the first section is connected to an interior of the hub. A first bearing is fitted between the space and the second section.

A positioning ring assembly includes a first positioning ring, a second positioning ring, and a third positioning ring. The first positioning ring and the third positioning ring are ring-shaped, and the second positioning ring is sleeve-shaped with a height. The first positioning ring and the second positioning ring are fitted onto the second section. A first end of the first positioning ring abuts the second positioning ring, and a second end of the first positioning ring abuts against a first end of the first bearing. The third positioning ring is fitted onto the third section. A first end of the third positioning ring abuts against the second positioning ring.

A ratchet sleeve has a first end thereof connected with a freewheel assembly, and a second end of the ratchet sleeve has a pawl seat which is located corresponding to the ratchet teeth. The pawl seat includes multiple pawls formed to an outer periphery thereof. A second bearing is fitted in an interior of the pawl seat. The ratchet sleeve is inserted into the space. Each pawl of the pawl seat is engaged with the ratchet teeth. The axle passes through the ratchet sleeve, and the ratchet sleeve is mounted to the third section. The second positioning ring is located between the pawl seat and the second section, and one end of the second bearing abuts against the third positioning ring.

Preferably, an outer diameter of the second section of the axle is larger than an outer diameter of the third section. A flange is formed between the first section and the second section. A stepped edge is formed between the second section and the third section. A second end of the first bearing abuts against the flange.

Preferably, an extended section axially extends and radially tapers inward from a first end of the second positioning ring. The first positioning ring and the second positioning ring are fitted onto the second section. The second end of the first positioning ring abuts against the first end of the first bearing that is away from the flange. The first end of the first positioning ring that is away from the first bearing abuts against a second end of the second positioning ring. The extended section at the first end of the second positioning ring is fitted onto the third section. The third positioning ring is fitted onto the third section, with the first end of the third positioning ring abutting against the extended section.

Preferably, the second positioning ring is made of brass.

Preferably, the second positioning ring is made of plastic.

Preferably, the first end of the ratchet sleeve is fitted with a freewheel assembly to transmit synchronous rotation to the ratchet sleeve. The second end of the ratchet sleeve has a pawl seat located corresponding to the ratchet teeth. Multiple pawls are formed to an outer periphery of the pawl seat. An interior of the pawl seat is fitted with the second bearing. The ratchet sleeve is inserted into the space, and each pawl is engaged with the ratchet teeth. The axle passes through the ratchet sleeve, and the second section and the third section pass through the ratchet sleeve. The third section is assembled with the ratchet sleeve. The second positioning ring is located between the pawl seat and the second section, and one end of the second bearing abuts against the third positioning ring.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle rear hub structure of the present invention;
Fig. 2 is an exploded view of the bicycle rear hub structure of the present invention;
Fig. 3 is a cross sectional view of the bicycle rear hub structure of the present invention;

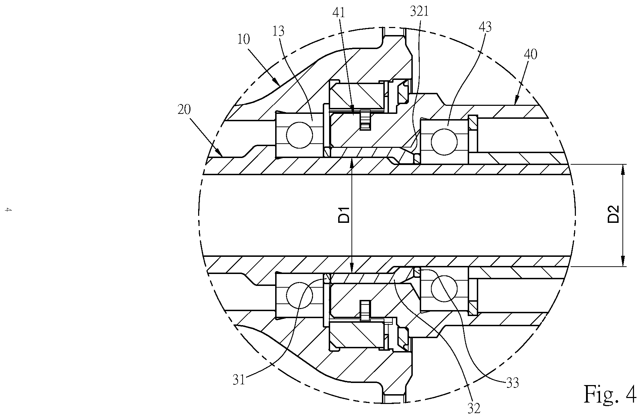

Fig. 4 is an enlarged cross sectional view of the circled portion in Fig. 3, and

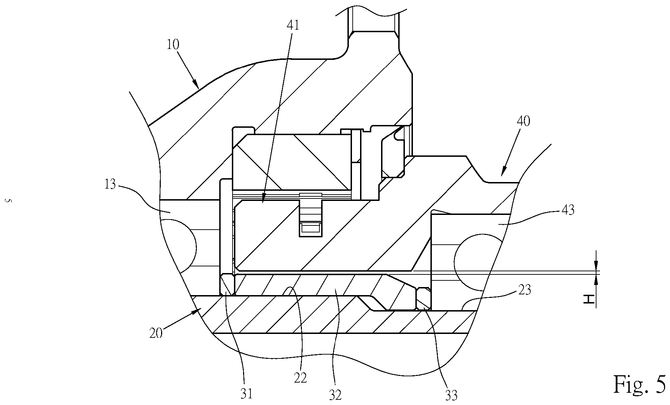

Fig. 5 is an enlarged cross sectional view of a portion of the circled portion in Fig. 3.

### DETAILED DESCRIPTION OF THE PREFERRED EMBODIMENT

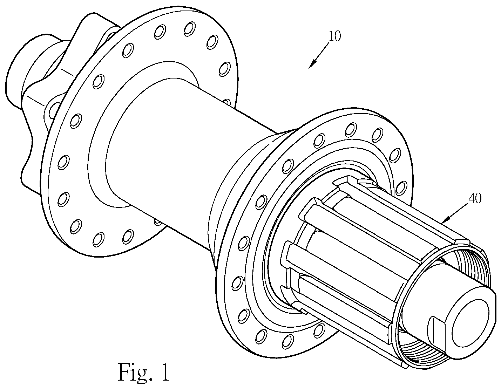

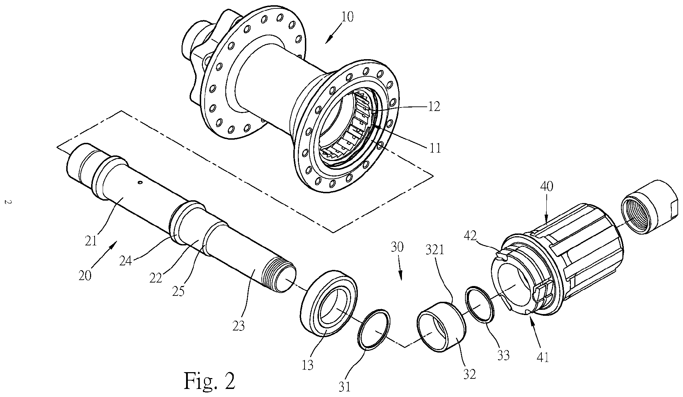

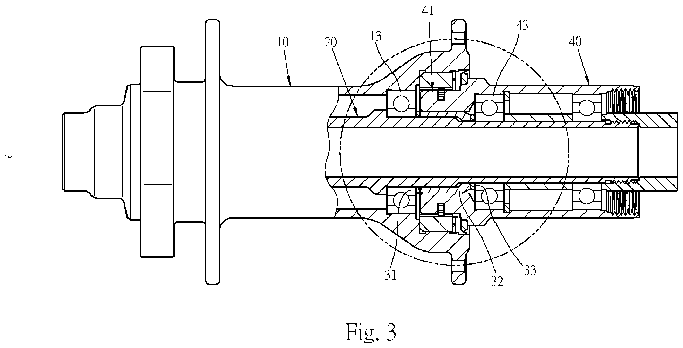

Referring to Figs. 1 to 3, the bicycle rear hub structure of the present invention comprises a hub 10, an axle 20, a positioning ring assembly 30 and a ratchet sleeve 40.

The hub 10 includes a space 11 defined in one end thereof, and multiple ratchet teeth 12 are formed in an inner wall of the space 11. An axle 20 passes through the hub 10. The axle 20 includes a first section 21, a second section 22, and a third section 23 sequentially formed to an outer periphery thereof. Each of the first, second and third sections 21, 22, 23 form a stepped structure. An end of the first section 21 is connected to an interior of the hub 10. An outer diameter (D1) of the second section 22 of the axle 20 is larger than an outer diameter (D2) of the third section 23. A flange 24 is formed between the first section 21 and the second section 22. A stepped edge 25 is formed between the second section 22 and the third section 23. A first bearing 13 is fitted between the space 11 and the second section 22. A second end of the first bearing 13 abuts against the flange 24.

The positioning ring assembly 30 includes a first positioning ring 31, a second positioning ring 32, and a third positioning ring 33. The first positioning ring 31 and the third positioning ring 33 are ring-shaped, and the second positioning ring 32 is sleeve-shaped with a certain height. An extended section 321 axially extends and radially tapers inward from a first end of the second positioning ring 32. The first positioning ring 31 and the second positioning ring 32 are fitted onto the second section 22. The second end of the first positioning ring 31 abuts against the first end of the first bearing 13 that is away from the flange 24. The first end of the first positioning ring 31 that is away from the first bearing 13 abuts against a second end of the second positioning ring 32. The extended section 321 at the first end of the second positioning ring 32 is fitted onto the third section 23. The third positioning ring 33 is fitted onto the third section 23, with a first end of the third positioning ring 33 abutting against the extended section 321. The second positioning ring 32 is made of brass or plastic to enhance smooth rotation and reduce weight.

The first end of the ratchet sleeve 40 is fitted with a freewheel assembly to transmit synchronous rotation to the ratchet sleeve 40. The second end of the ratchet sleeve 40 has a pawl seat 41 located corresponding to the ratchet teeth 12. Multiple pawls 42 are formed to an outer periphery of the pawl seat 41. An interior of the pawl seat 41 is fitted with the second bearing 43. The ratchet sleeve 40 is inserted into the space 11, and each pawl 42 is engaged with the ratchet teeth 12. The axle 20 passes through the ratchet sleeve 40, and the second section 22 and the third section 23 pass through the ratchet sleeve 40. The third section 23 is assembled with the ratchet sleeve 40. The second positioning ring 32 is located between the pawl seat 41 and the second section 22, and one end of the second bearing 43 abuts against a second end of the third positioning ring 33. There is a gap (H) between the outer circumferential surface of the second positioning ring 32 and the inner circumferential surfaces of the hub 10 and the ratchet sleeve 40, forming the rear hub structure.

The positioning ring assembly 30 is placed between the hub 10 and the ratchet sleeve 40. This positioning ring assembly 30 includes mutually abutting first, second, and third positioning rings 31, 32, 33 fitted on the axle 20. The second end of the first positioning ring 31 abuts against the first end of the first bearing 13 inside the hub 10, while the second end of the third positioning ring 33 abuts against the second bearing 43 inside the ratchet sleeve 40. The interaction between these three positioning rings 31, 32, 33 and the two bearings 13, 43 produces rotation, forming a loose radial fit. This allows the gap between them to compensate for concentricity differences among the hub 10, the axle 20, the ratchet sleeve 40, and the bearings 13, 43, making the hub 10 rotate more smoothly. The structure is simple, with fast production speed and low cost, making the overall design highly innovative and practically convenient.

When in assembly, the axle 20 is inserted through the hub 10, so that a second end of the first bearing 13 abuts against the flange 24. Then, the first, second, and third positioning rings 31, 32, 33 are sequentially fitted onto the axle 20, allowing the first positioning ring 31 to abut against the first bearing 13. Next, the ratchet sleeve 40 is inserted into the space 11, positioning the second positioning ring 32 between the axle 20 and the pawl seat 41. The extended section 321 abuts against the third positioning ring 33, and the second end of the third positioning ring 33 abuts against the second bearing 43, thus completing the assembly.

The second positioning ring 32 is designed with an extended section 321 at the first end thereof, and there is a gap (H) between the outer circumferential surface of the second positioning ring 32 and the inner circumferential surfaces of the hub 10 and the ratchet sleeve 40. This gap (H) can compensate for concentricity differences among the hub 10, the axle 20, the ratchet sleeve 40, and the bearings 13, 43, making the hub 10 rotate more smoothly.

The design of the second section 22 and third section 23 of the axle 20 is such that the outer diameter (D1) of the second section 22 is greater than the outer diameter (D2) of the third section 23. This can increase the strength between the hub 10 and the ratchet sleeve 40. The axle 20 has a stepped design on its outer circumference, with the second section 22 having a larger outer diameter, achieving the effect of enhancing lateral strength.

The second positioning ring 32 can be made of brass or plastic, which can enhance the smoothness of rotation and achieve a lightweight effect. The first positioning ring 31 and the third positioning ring 33 can be made of materials such as steel, aluminum, or brass, which have similar rigidity characteristics. This can improve the smoothness and stability of rotation.

While we have shown and described the embodiment in accordance with the present invention, it should be clear to those skilled in the art that further embodiments may be made without departing from the scope of the present invention.

## Claims

1. A bicycle rear hub structure comprising:
a hub (10) having a space (11) defined in one end thereof, multiple ratchet teeth (12) formed in an inner wall of the space (11);
an axle (20) passing through the hub (10), a first section (21), a second section (22), and a third section (23) sequentially formed to an outer periphery of the axle (20), each of the first, second and third sections (21, 22, 23) forming a stepped structure, an end of the first section (21) connected to an interior of the hub (10), a first bearing (13) fitted between the space (11) and the second section (22);
a positioning ring assembly (30) having a first positioning ring (31), a second positioning ring (32), and a third positioning ring (33), the first positioning ring (31) and the third positioning ring (33) being ring-shaped, and the second positioning ring (32) being sleeve-shaped with a height, the first positioning ring (31) and the second positioning ring (32) fitted onto the second section (22), a first end of the first positioning ring (31) abutting the second positioning ring (32), a second end of the first positioning ring (31) abutting against a first end of the first bearing (13), the third positioning ring (33) fitted onto the third section (23), a first end of the third positioning ring (33) abutting against the second positioning ring (32);
a ratchet sleeve (40) having a first end thereof connected with a freewheel assembly, a second end of the ratchet sleeve (40) having a pawl seat (41) which is located corresponding to the ratchet teeth (12), the pawl seat (41) including multiple pawls (42) formed to an outer periphery thereof, a second bearing (43) being fitted in an interior of the pawl seat (41), the ratchet sleeve (40) inserted into the space (11), each pawl (42) of the pawl seat (41) engaged with the ratchet teeth (12), the axle (20) passing through the ratchet sleeve (40), the ratchet sleeve (40) mounted to the third section (23), the second positioning ring (32) located between the pawl seat (41) and the second section (22), and one end of the second bearing (43) abutting against the third positioning ring (33).

2. The bicycle rear hub structure as claimed in claim 1, wherein an outer diameter (D1) of the second section (22) of the axle (20) is larger than an outer diameter (D2) of the third section (23), a flange (24) is formed between the first section (21) and the second section (22), a stepped edge (25) is formed between the second section (22) and the third section (23), a second end of the first bearing (13) abuts against the flange (24).

3. The bicycle rear hub structure as claimed in claim 2, wherein an extended section (321) axially extends and radially tapers inward from a first end of the second positioning ring (32), the first positioning ring (31) and the second positioning ring (32) are fitted onto the second section (22), the second end of the first positioning ring (31) abuts against the first end of the first bearing (13) that is away from the flange (24), the first end of the first positioning ring (31) that is away from the first bearing (13) abuts against a second end of the second positioning ring (32), the extended section (321) at the first end of the second positioning ring (32) is fitted onto the third section (23), the third positioning ring (33) is fitted onto the third section (23), with the first end of the third positioning ring (33) abutting against the extended section (321).

4. The bicycle rear hub structure as claimed in claim 1, wherein the second positioning ring (32) is made of brass.

5. The bicycle rear hub structure as claimed in claim 1, wherein the second positioning ring (32) is made of plastic.

6. The bicycle rear hub structure as claimed in claim 1, wherein the first end of the ratchet sleeve (40) is fitted with a freewheel assembly to transmit synchronous rotation to the ratchet sleeve (40), the second end of the ratchet sleeve (40) has a pawl seat (41) located corresponding to the ratchet teeth (12), multiple pawls (42) are formed to an outer periphery of the pawl seat (41), an interior of the pawl seat (41) is fitted with the second bearing (43), the ratchet sleeve (40) is inserted into the space (11), each pawl (42) is engaged with the ratchet teeth (12), the axle (20) passes through the ratchet sleeve (40), and the second section (22) and the third section (23) pass through the ratchet sleeve (40), the third section (23) is assembled with the ratchet sleeve (40), the second positioning ring (32) is located between the pawl seat (41) and the second section (22), and one end of the second bearing (43) abuts against the third positioning ring (33).
